# EUROPEAN PATENT SPECIFICATION

(11) **EP 3 096 597 B1**
(45) Date of publication and mention of the grant of the patent: **30.09.2020**
(21) Application number: 15740566.3
(22) Date of filing: 21.01.2015
(51) Int. Cl.: A01B 35/28, A01B 23/06, A01B 71/04

(54) **METHOD AND IMPLEMENT REGULATION DEVICE FOR AN AGRICULTURAL MACHINE**
VERFAHREN UND ARBEITSGERÄTREGULIERUNGSVORRICHTUNG FÜR EINE LANDWIRTSCHAFTLICHE MASCHINE
PROCÉDÉ ET DISPOSITIF DE RÉGLAGE D'OUTILS POUR MACHINE AGRICOLE

(30) Priority: 21.01.2014 SE 1450055
(43) Date of publication of application: 30.11.2016
(73) Proprietor: Väderstad Holding AB, 590 21 Väderstad (SE)
(72) Inventor: COLLIN, Morgan, 595 51 Mjölby (SE); GYLLENHAMMAR, Per, 591 45 Motala (SE); LUBKOWITZ, Andreas, 590 28 Borensberg (SE); EDVINSSON, Mikael, 590 12 Boxholm (SE)
(74) Representative: Keijser Bergöö, Malin Katarina
(86) International application number: PCT/SE2015/050056
(87) International publication number: WO 2015/112077

(56) References cited:
- WO-A1-02/19791
- WO-A1-92/06580
- DE-A1- 10 104 911
- US-A- 1 042 651
- US-A- 2 244 774
- US-A- 3 244 237
- US-A1- 2004 245 004

## Description

The present invention is related to a method for an agricultural machine according to the pre-characterising portion of patent claim 1. The invention is also related to an implement regulation device for carrying out the method according to the pre-characterising portion of patent claim 6.

### Background and prior art

During late years it has been more common with agricultural implements with discs in two parallel rows, for example as those who are sold under the trade name "Carrier" by Väderstad-Verken AB. This machine type shows many characteristics which are appreciated by the farmers. With the spreading of the machine type the machines are used at many different cultivation circumstances with many types of crops in many climate zones, at different soil types etc. The machine type, which is a special type of disc implement, is intended to cultivate the soil and to cultivate down harvest rests as straw, stubble and even weeds. After harvesting of corn there are big quantities of harvest rests on the ground, often stands corn stems meter high left. This provides great demands on the ability of the machine to let through big quantities of harvest rests without stop. This will be special demanding if one simultaneously wants to drive relatively deep. After harvesting of oil plants the customer often wants to "strip off' the whole ground, but cultivate the soil very shallow. In this case a high angle of action is very important. In other cases, especially in the spring, the customer maybe only wants to cultivate the soil relatively deep to cultivate in "the heat" in the soil, i.e. one turns up cold deeper laying soil which is exposed to the sun to heat up volume of the soil. This can be especially important at late sowing of corn, which demands a warm soil to be well developed.

Of the above it is evident that the machine type needs to be very flexible and should be adjustable for different types of running. Commonly is that the machine type was provided with discs which have a firm cutting angle of about 16-18 degrees. Some machines have been provided with adjustable angle adjustment, but as those were quite complicated devices, those machines have hardly been established on the market. It is desirable with a simple and durable device to adjust the cutting angle which is required at a certain type of cultivation circumstances. In principle this is so that a high cutting angle of about 18 degrees is possible at a limited straw quantity and a small working depth.

A previously known device is shown in US 1,042,651 wherein the shaft at the hub of the disc can be fastened in different angles by means of a locking screw which is radially led through a threaded hole in the hub of the disc. This device is not quite secure as the shaft easily can glide in the hub hole or can the screw simply be broken. A device according to the preamble of claim 6 is shown in WO 02/19791 A1.

At need of greater working depths and in combination with greater quantities of harvest rests the cutting angle must be less than about 12-14 degrees to make possible a run free from interference. This is in some extent also connected to which hoeing degree the disc is provided with.

### Object of the invention

The object of the present invention is to provide a method and an implement regulation device for an agricultural machine of the type mentioned above, which solves the problems mentioned above.

### Short description of the invention

The object is achieved with a method and an implement regulation device for an agricultural machine, which has been given the characterizing features of the independent claims 1 and 6, respectively.

Preferred embodiments of the method and the implement regulation device according to the invention have been given the characteristics which are apparent from the subclaims.

If one provides the hub of the discs with a shaft which is provided with an angle of some degrees and simultaneously provides so that it can be rotated and be fixed in different positions, one achieves an adjustable disc angle. The possible angle variation will be the double turning angle of the shaft. This is among others known through prototypes which are manufactured. Only this solution is however not sufficient because it is very difficult, after a period of use, to turn the shaft as soil, dirt and rust makes that the shaft jams in the casing. The improved solution according to the invention consists in that the shaft is given a form tied and force tied security against the lower end of the arm. To be able to loosen the shaft at change of the working angle of the disc the shaft is preferably given a substantially conical form, i.e. in the circumferential direction substantially or in the hole conical with the provided corresponding chamfered or corresponding, in the direction of the axel/shaft portions by which a form tied and force tied coupling is achieved. In this way a controlled possibility is given to move the shaft outwards by adjusting. The adjustment would then be very simple and can be carried out with a couple of simple handgrips. By loosening the shaft in the conical hole by partially screwing out a centrally in the shaft fixed screw it is facilitated to turn the shaft to a desired positioning position and the fix this in this position by tightening said screw. In that way the possibility is given to change the working angle of the disc.

In this way the disc can be provided with an adjustability which only has a marginal cost influence and is durable and maintenance free. This solution means that one and only machine can be used under many different circumstances at different working depths.

Another advantage with the regulation device according to the invention is that the joint can be made short and compact to facilitate going through of straw, soil and the plant rests. The conical form implies that the axial force which is taken up by the bearing acts in the direction to press in the shaft in the substantially conically formed hole, which in turn contributes to a stable joint.

### Short description of the drawings

The invention is described more in detail in the following with reference to the attached drawings, which show preferred embodiments.
Fig. 1 shows a perspective view from above of an agricultural machine in a working position with an implement regulation devise according to the invention.
Fig. 2 shows a partially enlarged perspective view of a part of the agricultural machine.
Fig. 3 shows a first embodiment of the implement regulation device according to fig. 1 in section.
Fig. 4 shows a partially enlarged perspective view of a hub portion of an arm of the embodiment according to fig. 3, which hub portion consists of a part of the implement regulation device according to the invention.
Fig. 5 shows a partially enlarged perspective view of a shaft which is attached to the hub portion of the disc, which constitutes a part of the first embodiment of the implement regulation device according to the invention.
Fig. 6 shows a second embodiment of the implement regulation device according to fig. 1 in section.
Fig. 7 shows a partially enlarged perspective view of a hub portion of an arm of the second embodiment according to fig. 6, which hub portion constitutes a part of the implement regulation device according to the invention.
Fig. 8 shows a partially enlarged perspective view of a shaft which is connected to the hub portion of the disc, which portion constitutes a part of the second embodiment of the implement regulation device according to the invention.
Fig. 9 shows a shaft according to fig. 8 in a more perspective view than in fig. 8.

### Description of preferred embodiments

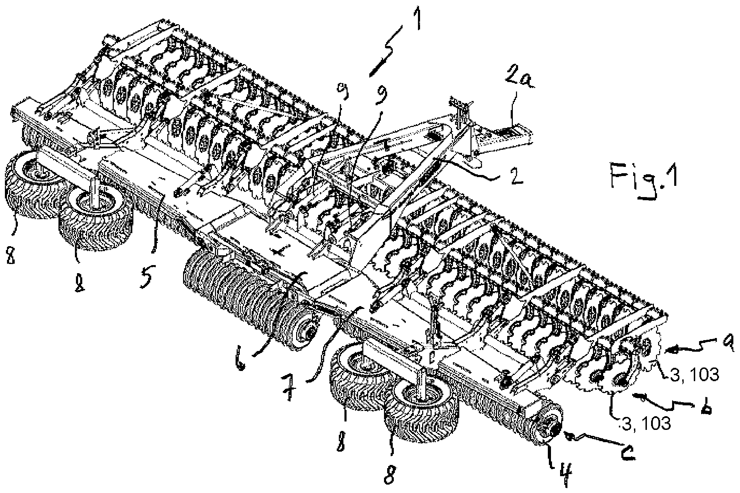

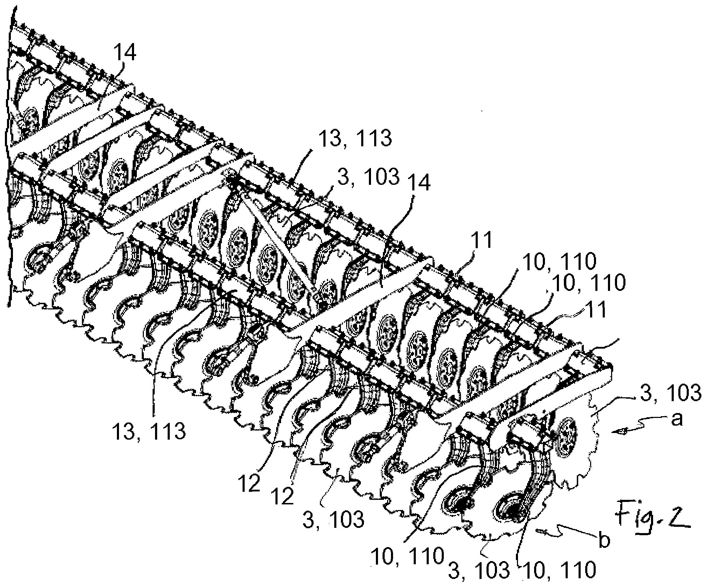

In figs. 1 and 2 an agricultural machine 1 is shown in a working position. The agricultural machine 1 has a frame 2 and a towing device 2a, which suitably is connectable to and can be towed by a not shown tractor. The machine 1 consists here of three rows a, b, c of implements in form of two former rows a, b of soil working, free rotatable, discs 3 and a rear row c with roller aggregates 4. Each disc 3 in one of the both rows a, b is turned to the opposite direction in comparison with corresponding discs in the second row b and a, respectively. As the discs 3 are provided in figs. 1 and 2 in the row a an oil flow is given outwardly from the implement centre and in the row b a soil flow inwardly towards the implement centre. In a known way the rows a and b with discs 3 and rear row c with the roller aggregates 4 are divided in three individually hinged sections 5, 6 and 7. The transport wheels 8, which are journaled on the outer frame sections 5 and 7 are together with the frame sections 5, 7 by means of hydraulic power devices 9 turnable to a transport position for the agricultural machine 1. This principle construction of the implement is known. A first and a second embodiment of a method and an implement regulation device according to the invention provided on the implement of the agricultural machine 1 can also be used on other agricultural machines.

In fig. 2 is shown more evident that discs 3 in the both rows a and b are freely journaled at the bottom of the arms 10, 110 and journaled suspended on transverse beams 11 and 12 by means of bearing devices 13, 113 attached at the upper ends of the arms 10 by means of welding or moulding. Between the beams 11 and 12 protection metal sheets 14 are provided.

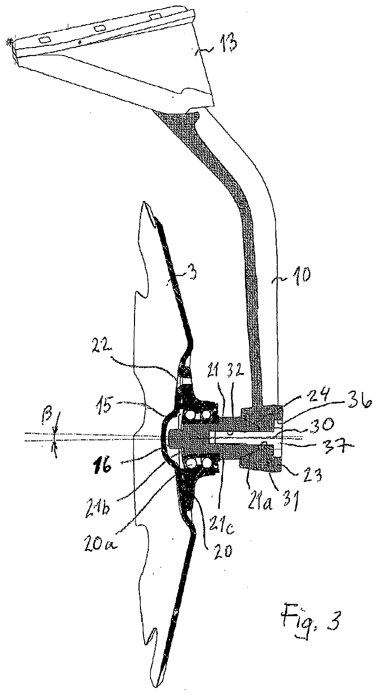

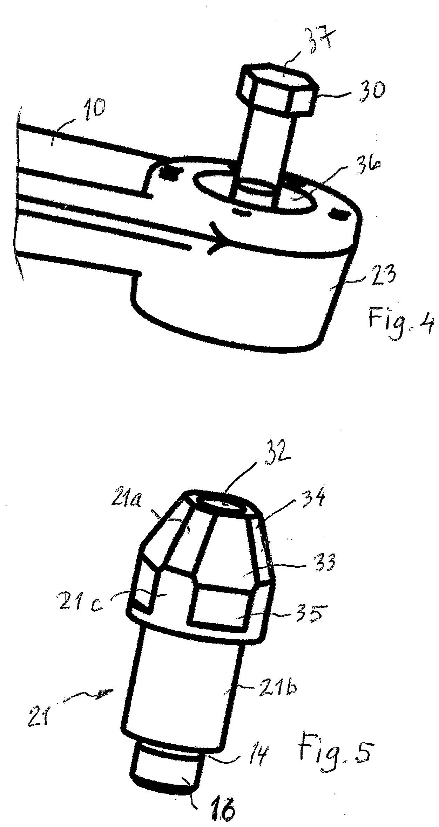

In figs. 3-5 a first embodiment of the method according to the invention is shown in greater detail to change the adjustment of an implement and even a first embodiment of the implement regulation device to carry out the method.

In fig. 3 is shown in greater enlargement the suspension and the bearing of the discs 3. Each disc 103 is accordingly fastened at the hub 20, which is freely journaled about a bearing portion 121b, which has the form of a substantially circular cylindrical part 21b of a shaft 21. The opposite end of the shaft 21 constitutes of a conical part 21a, which has the form of a substantially or partly conical part 21a. The upper end of the arm 10 is provided with a bearing means 13, as a rubber spring or other flexible suspension. The bearing means 13 consists in a known way of two bearing halves, the lower bearing half being connected to the arm and the upper bearing half is by means of a screw/nut joint fastened at the lower bearing half. The beams 11 and 12 (see fig. 2) extent through the bearing means 13 and four rubber rods can in a known way be placed between the beams 11 and 12 and said bearing halves. The discs 3 are suitably screw tightened at the hubs 20 by means of screw joints 22. The shaft 21 is rotatable journaled in a bearing 20a in the hub 20. The shaft 21 is angled preferably a few degrees β according to fig. 3 between the centre axis of the substantially conical part 21a and the centre axis of the circular cylindrical part 21b which is placed in the bearing 20a. The shaft 21 can be rotated and locked between at least two positions, so that an adjustable disc angle is achieved. In fig. 3 the angle between the substantially conical part 21a and the circular cylindrical part 21b of the shaft 21 is an angle β. As the substantially conical part 21a of the shaft is rotated for instance 180 degrees in a corresponding substantially or partly conical hole 24 in the end part 23 of the arm 10 to another position means that the disc angle in relation to the partly conical part 21a can be amended to maximal 2β. In the shown case β can be about 2 degrees and 2β accordingly be about 4 degrees. Other wished position of the shaft 21 and the thereby values of the angle β are naturally also possible within the scope of the patent claims.

The circular cylindrical part 21b of the bearing has on its towards the disc 3 faced side a protruding part 16 with a cut in 14 which extends in the circumferential direction and is provided at the circular cylindrical part 21b to receive a locking dasher 15 to fasten the shaft 21 at the inner bearing half of the hub 20.

The shaft 21 is in the circumferential direction provided with a pre-determined number of chamfered surfaces 33 between the conical surfaces 34 of the partly conical part 21a which together correspond to the form in the partly conical hole 24 in the end portion 23. The intended working angle is fixed by tightening a screw joint 30, as the chamfered surfaces meet correspondingly intended surfaces in the end part 23. Other configurations of the shaft form and the corresponding form of the hole are of course possible, as is described below. The outer form of the partly conical part 21a of the shaft 21 shall correspond to the form of the receiving hole 24 in the end portion 23 of the arm 10, whereby a form tied and force tied coupling is achieved in at least two positions. The partly conical part 21a can be formed, so that it comprise chamfered surfaces whish are preferably constantly distributed in the circumferential direction, preferably being of a constant number and preferably four in number.

The shaft 21 consists also of another substantially or partly cylindrical part 21c between the partly conical part 21a which can be introduced in the cylindrical end portion 23 of the arm and the circular cylindrical part 21b which exists in the bearing. This part 21c has in the circumferential direction distributed plain portions 35 to by means of a tool, as a not shown wrench, be able to rotate the conical part 21a of the shaft 21 in the cylindrical end portion 23 of the arm at the changing of the position of the shaft 21 and thereby also of the disc 3.

The centrally through a hole 31 in the end portion fixed screw 30 of the screw joint is screwed into a threaded hole 32 in the shaft 21. By loosening the shaft 21 in the partly conical hole 24 by partly screwing out the centrally in the shaft fixed screw 30 the shaft can be rotated to a new intended position and fixed in this by tightening the screw 30. Thereby is given a possibility to change a working angle of a disc 3.

The threaded part of the threaded hole 32 should be so long, that by loosening the screw 30 to rotate the shaft 21 to a new intended position, the screw is still engaged with said threaded part. At the outer end of the end portion 23 of the arm 10 the hole 31 in the end portion 23 is widened with a countersink 36 so that the head 37 of the screw 30 can be countersinked therein by tightening. The head of the screw is of a hexagon type, but can also be of another type, as a cap screw, a torq screw, a cross headed screw or a slotted screw. Instead of a screw the screw joint can consist of a threaded rod which extends out from the coupling part 21a of the shaft 21, which rod can receive a nut which is tightened at the outer side of the end portion 23 by tightening the screw joint.

The end portion 23 of the arm 10 has a preferably partly conical, towards the partly conical part 21a formed corresponding with the chamfered provided hole 24. With a couple of easy handgrips the adjustment (rotating of the shaft 21) can be performed to a new position for the disc 3.

The coupling part 21 a can be formed in a number of ways which make it possible to achieve a form tied and power tied coupling with the end portion 23 of the arm 10. The section of the coupling part 21a should be uniformed with reduced section area seen from the bearing part 21b to make an easy adjustment possible. The section can accordingly be polygon formed. The receiving hole 24 has preferably a form which corresponds to the form of the coupling part 21a. The form of the hole 24 needs however not identically correspond to the form of the coupling part 21a, as long as the form tied and the power tied coupling between them can be achieved in a desired intended number of pre-determined positions.

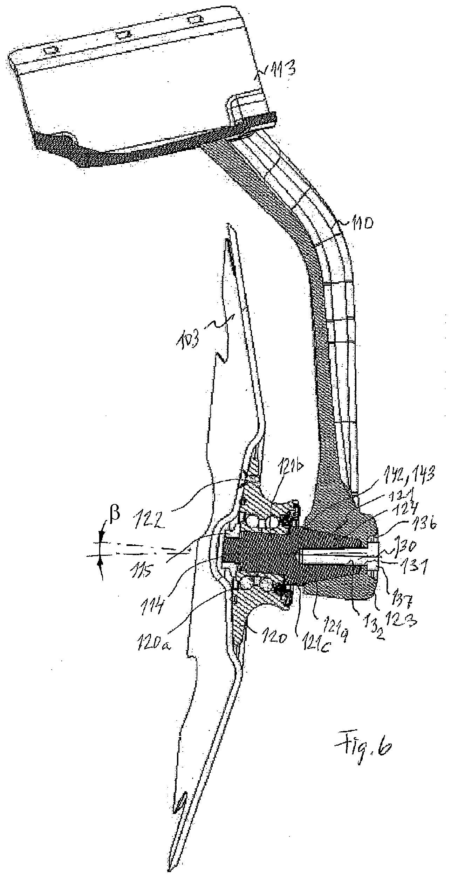

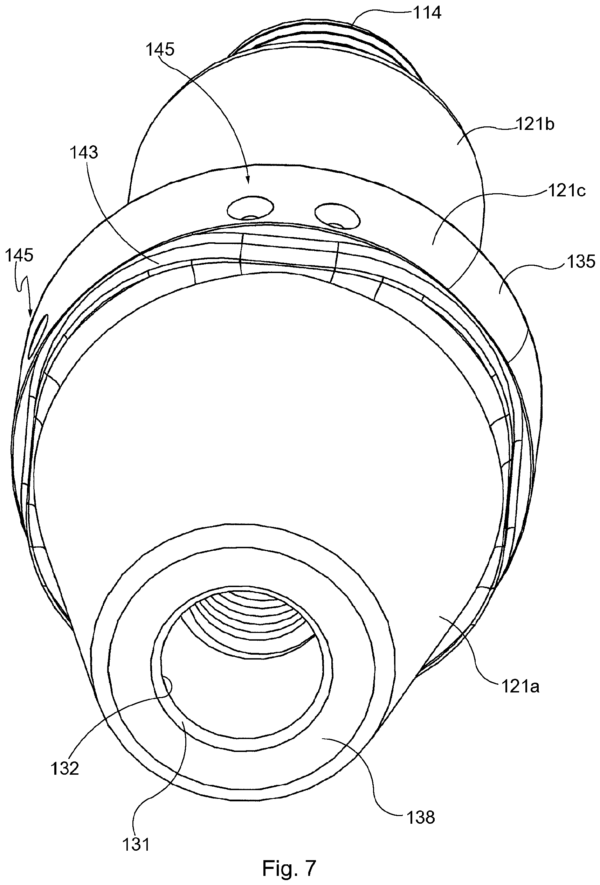

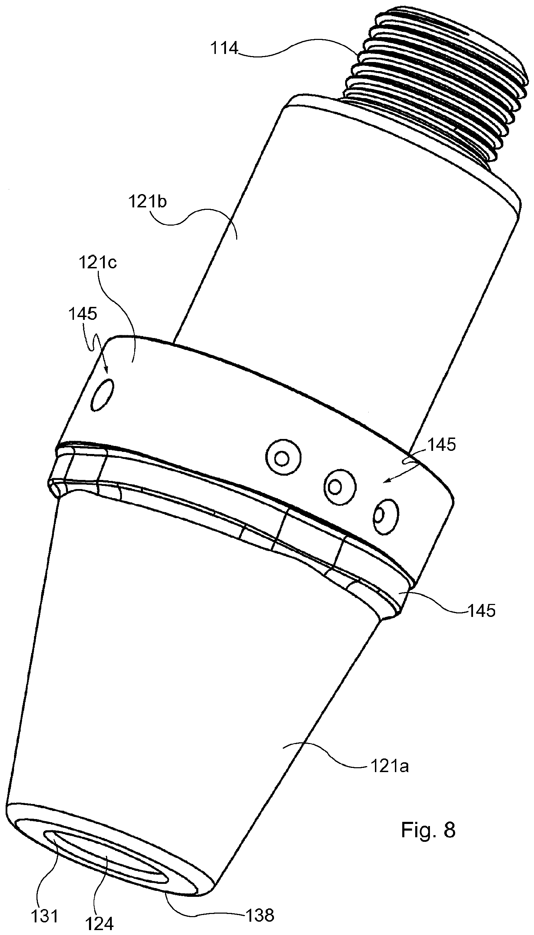

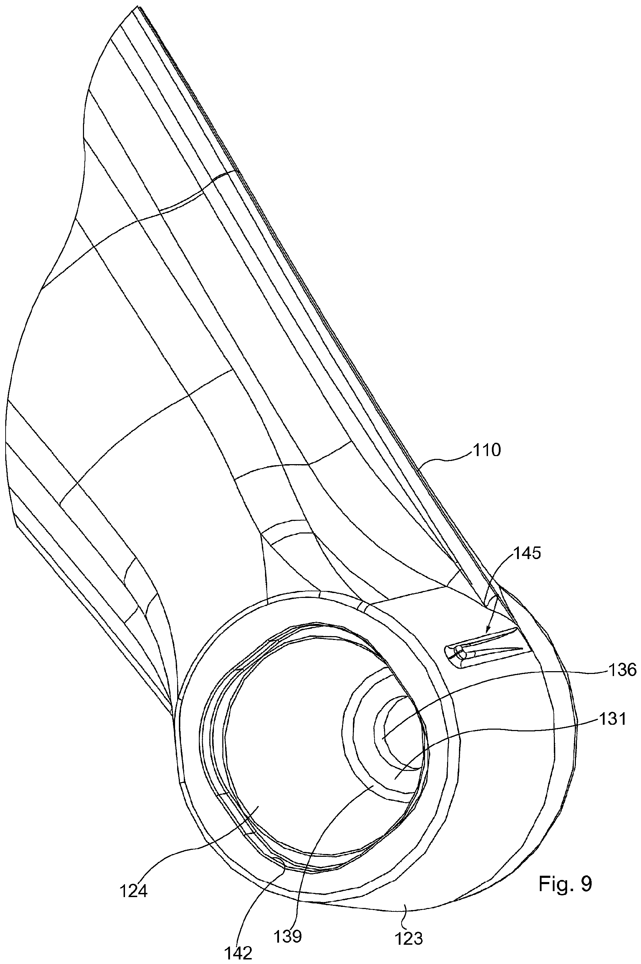

In figs. 6-9 a first embodiment of the method according to the invention is shown in greater detail to change the adjustment of an implement and even a first embodiment of the implement regulation device to carry out the method.

In fig. 6 is shown in greater enlargement the suspension and the bearing of the discs 103. Each disc 103 is accordingly fastened at the hub 120, which is freely journaled about a bearing portion 121b of a shaft 121, the bearing portion 121b having a substantially circular cylindrical form. The opposite end of the shaft 121 constitutes of a coupling part 121a, which has a substantially conical form. The upper end of an arm 110 is provided with a bearing means 113, as a rubber spring or other flexible suspension. The bearing means 113 consists in a known way of two bearing halves, the lower bearing half being connected to the arm and the upper bearing half is by means of a screw/nut joint fastened at the lower bearing half. The beams 11 and 12 (see fig. 2) extend through the bearing means 113 and four rubber rods can in a known way be placed between the beams 11 and 12 and the said bearing halves. The discs 103 are suitably screw tightened at the hubs 120 by means of screw joints 122 provided in the circumferential direction.

The shaft 121 is rotatably journaled in a bearing 120a in the hub 120. The shaft 121 is angled preferably a few degrees β according to fig. 6 between the centre axis of the substantially conical part 121a and the centre axis of the circular cylindrical part 121b which is existing in the bearing 120a. The shaft 121 can be rotated and fixed between at least two positions, so that an adjustable disc angle is achieved. In fig. 6 the angle between the substantially conical part 121a and the circular cylindrical part 121b of the shaft 121 is an angle β. As the substantially conical part 121a of the shaft is rotated for instance 180 degrees in a corresponding substantially or partly conical hole 124 in the end part 123 of the arm 110 to another position means that the disc angle in relation to the partly conical part 121a can be amended to maximal 2β. In the shown case β can be about 2 degrees and 2β accordingly be about 4 degrees. Other wished position of the shaft 121 and thereby values of the angle β are naturally also possible within the scope of the patent claims.

The circular cylindrical part 121b of the bearing has on its towards the disc 103 faced side a protruding threaded part 114 to receive a nut 115 to fasten the shaft 121 at the inner bearing half of the hub 120.

The shaft 121 also consists of another substantially cylindrical part 121c between the conical part 121a which can be introduced in the cylindrical end portion 123 of the arm and the circular cylindrical part 121b which exists in the bearing. This part 121c has in the circumferential direction distributed plain parts 135 to by means of a tool, as a not shown wrench, can rotate the shaft 121 the conical part 121a of the shaft 121 in the cylindrical end portion 123 of the arm at the changing of the position of the shaft 121 and thereby also of the disc 103.

The centrally through a hole 131 in the end portion fixed screw 130 of the screw joint is screwed into a threaded hole 132 in the conical part of the shaft 121. By loosening the shaft 121 in the conical hole 124 by partly screwing out the centrally in the shaft fixed screw 130 the shaft can be rotated to a new intended position and fixed in this by tightening the screw 130. Thereby is given a possibility to change a working angle of a disc 103.

The threaded part of the threaded hole 132 should be so long, that by loosening the screw 130 to rotate the shaft 121 to a new intended position, the screw 130 is still engaged with said threaded part. At the outer end of the end portion 123 of the arm 110 the hole 131 in the end portion 123 is widened with a countersink 136 so that the head 137 of the screw 130 can be countersinked therein. The head 137 of the screw 130 is of a hexagon type, but can also be of another type, as a cap screw, a torq screw, a cross headed screw or a slotted screw. Instead of a screw the screw joint can consist of a threaded rod which protrudes out from the couplings part 121a of the shaft 121, which rod can receive a nut which is tightened at the outer side of the end portion 123 by tightening the screw joint.

The end portion 123 of the arm 110 has a preferably conical, towards the partly conical part 121a form corresponding hole 124. With a couple of easy handgrips the adjustment (rotating of the shaft 121) can be performed to a new position for the disc 103.

At the end of the part 123 is provided an area with a profiled, roundabout extended part 142, which is faced against the opening of the hole in the axial direction towards the conical end of the shaft 121 and which form a symmetrical form with frequent parts. At the transition between the conical part 121a and the mid part 121c on the shaft 121 is also provided an area with a profiled, roundabout extended part 142, which is faced against the opening of the hole in the axial direction towards the conical end of the shaft 121 and which form symmetrically frequent symmetrical positions to fit to the form of the profiled roundabout part 142. As the conical end part 121a of the shaft 121 is led in with its conical point into the conical hole 124 of the end part 123 and the screw 130 is tightened the profiled parts 142 and 143, which are faced towards each other, are pressed against each other and are moved into engagement with each other in intended positions, the shaft 121being for example able to adopt two or more distinct positions in relation to the end portion. These positions correspond to the different angle positions of the disc 103 in relation to the arm 110, which has been described above in connection with the angle β.

Between the point of the conical part 121a and the bottom of the conical hole 124 is a space arranged to provide intended clamp action between the profiled parts 142, 143. The profiled parts 142, 143 can be formed in different ways to give the conical part 121a of the shaft 121 at least two distinct positions in the conical hole 124. By tightening the screw 130 form tied and force tied coupling between the end portion 123 of the arm 110 and the shaft 121 is possible. The section of the conical part 121c of the shaft 121 should therefore have a circular form to easy adjustment to intended positions.

On the side of the shaft a cut can be provided and markings 145 can be provided on the mid part 121c of the shaft for visual marking of the different positions of the conical part 121a of the shaft 121 in relation to the hole 124. The form of the hole does not be identically correspond to the form of the coupling part 121a as long as a form tied and force tied coupling can be achieved between them in intended pre-determined positions.

The method and the implement regulation device according to the invention is to its construction not limited to the embodiments shown in figs. 1-9, but can be modified within the scope of the accompanying claims.

## Claims

1. Implement regulation method for an agricultural machine (1) comprising a frame (2), at least a with the frame connected, in the driving direction transferred row (a, b) of implements (3) in the form of journaled discs (3), which are freely rotatable, each disc (3) being connected to an arm (10, 110), which is journaled at the frame (2) and to which each disc is connected via a shaft (21, 121) attached to the hub of the disc, wherein the hub (20, 120) of each disc (3, 103) is provided with a bearing part (21b, 121b) for the shaft (21, 121), which bearing part is journaled at the middle of the hub, and wherein the shaft at its other end has a coupling part (21a, 121a) formed so that it substantially corresponds to a form part at an end portion (23, 123) of the arm (10, 110), whereby a form tied and force tied coupling is achieved, **characterised in that** the centre axis of the coupling part (21a, 121a) is angled at an angle (β) in relation to the centre axis of the bearing part (21b, 121b), and that the form tied and force tied coupling can be achieved in at least two pre-determined positions freely receiving said coupling part in a corresponding hole (24, 124) in the end portion (23, 123) of the arm (10, 110), wherein the method comprises changing a working angle of an implement (3) by loosening the shaft in the receiving hole (24, 124) by loosening a screw joint (30, 130), so that the coupling part (21a, 121a) of the shaft is loosened, rotating in the end portion to a new intended position, and fixedly locking it in this position by tightening said screw joint.

2. Method according to claim 1, **characterised in that** it further comprises fixing said working angle by tightening said screw joint by leading a cut screw (30, 130) through a central hole (31, 131) in the end portion (23, 123) of the arm (10, 110) and screw tightening it in a threaded hole (32, 132) in the shaft (21, 121).

3. Method according to claim 2, **characterised in that** it further comprises screw tightening said screw head of said screw (30, 130) so that it abuts a step in a recess (36, 136) in the end portion (23, 123) with said central hole (31, 131).

4. Method according to any of claims 1-3, **characterise**d in that the coupling part (21a) of the shaft (21) has a partially conical form and is provided in the circumferential direction with a pre-determined number of chamfered surfaces (33) between the conical surfaces (34) of the coupling part (21a), said surfaces substantially corresponding to the chamfered surfaces in the receiving hole (24), wherein the method further comprises fixing said working angle by tightening the screw (30) as the chamfered surfaces of the conical part (21a) of the shaft (21) meet correspondingly intended surfaces in a new position in the end portion (23).

5. Method according to any of claim 1-3, **characterised in that** the substantially conical part (121a) of the shaft (121) is provided with a profiled roundabout extending part (142) which is faced in the axial direction against its end (138), and that the end portion (123) at the end of the hole (124) is provided with a corresponding a profiled roundabout extending part (143) which is faced in the axial direction against its opening, wherein the method further comprises tightening the profiled parts (142, 143) together by means of a screw joint (130) so that the profiled parts (142, 143) form a form tied and force tied coupling.

6. Agricultural machine (1) comprising a frame (2), at least one with the frame connected, in the driving direction transferred row (a, b) of implements (3, 103) in the form of journaled discs (3, 103), which are freely rotatable, each disc (3, 103) being connected to an arm (10, 110), which is journaled at the frame (2) and to which each disc is connected via a shaft (21, 121) attached to the hub of the disc, wherein the hub (20, 120) of each disc (3, 103) has a bearing part (21b, 121b) for the shaft (21, 121), which bearing part is journaled at the middle of the hub, and wherein the shaft at its other end has a coupling part (21a, 121a) having a formed portion (33, 143), so that it corresponds to a formed portion (142) of the end portion (23,123) of the arm (10, 110), whereby a form tied and force tied coupling is achieved, **characterised in that** the centre axis of the coupling part (21a, 121a) is angled at an angle (β) in relation to the centre axis of the bearing part (21b, 121b), and that the form tied and force tied coupling can be achieved in at least two pre-determined positions, wherein the agricultural machine (1) further comprises an implement regulation device comprising a screw joint (30, 130), which is centrally provided and connects the coupling part (21a, 121a) of the shaft (21, 121) with the end portion (23, 123) of the arm (10, 110), and which is provided to be loosened so that the shaft can be turned to a new intended position by loosening of the shaft in a receiving hole, and be fixed locked in this position by tightening said screw joint, thereby giving the possibility to change a working angle of an implement (3, 103).

7. Agricultural machine (1) according to claim 6, **characterised in that** said screw joint consists of a screw (30, 103) which is led through a central hole (31, 131) in the end portion (23, 123) of the arm (10, 110) and is provided to be screwed in a threaded hole (32, 132) in the coupling part (21a, 121a) of the shaft (21, 121).

8. Agricultural machine (1) according to claim 7, **characterised in that** the threaded part of the threaded hole (32, 132) is long enough to still be engaged with said threaded part if the screw (30, 130) for rotating the coupling part (21a, 121a) of the shaft (21, 121) is loosened to a new intended position.

9. Agricultural machine (1) according to claim 6-8, **characterised in that** the coupling part (21a) of the shaft (21) has a partially conical form and is provided in the circumferential direction with a pre-determined number of chamfered surfaces (33) between the conical surfaces (34) of the coupling part (21a), which surfaces substantially correspond to chamfered surfaces in the receiving hole (24), said working angle being fixed by tightening said screw (30), wherein the chamfered surfaces (33) form a form tied and power tied coupling when the parts have been brought together.

10. Agricultural machine (1) according to any of claims 6-8, **characterised in that** the substantially conical part (121a) of the shaft (121) is provided with a profiled, roundabout extending part (142), which in the axel direction is faced against the point of the substantially conical part, and that the end portion (123) at the end of the substantially conical hole (124) is provided with a corresponding profiled, roundabout extending part (143), which is faced in the axel direction, said working angle being fixed by tightening the screw (130), wherein the profiled parts (142, 143) form a form tied and force tied coupling when the parts have been brought together.

11. Agricultural machine (1) according to any of claims 4-9, **characterised in that** between the bearing part (21b, 121b) of the shaft (21, 121) and the coupling part (21a, 121a) of the shaft is provided a partially circular part (21c, 121c) with plain engagement surfaces to make it possible to rotate the shaft, for instance by means of a wrench.

## Patentansprüche

1. Werkzeugeinstellungsverfahren für eine landwirtschaftliche Maschine (1), umfassend einen Rahmen (2), wenigstens eine mit dem Rahmen verbundene in der Fahrtrichtung verlagerte Reihe (a, b) von Werkzeugen (3) in der Form von gelagerten Scheiben (3), die frei drehbar sind, wobei jede Scheibe (3) mit einem Arm (10, 110) verbunden wird, der an dem Rahmen (2) gelagert wird und mit dem jede Scheibe über einen Schaft (21, 121) verbunden wird, der an der Nabe der Scheibe angebracht wird, wobei die Nabe (20, 120) jeder Scheibe (3, 103) bereitgestellt wird mit einem Lagerteil (21b, 121b) für den Schaft (21, 121), wobei das Lagerteil in der Mitte der Nabe gelagert wird, und wobei der Schaft an dessen anderen Ende ein Kopplungsteil (21a, 121a) aufweist, das so gebildet wird, dass es im Wesentlichen einem Formteil an einem Endabschnitt (23, 123) des Arms (10, 110) entspricht, wobei eine formgebundene und kraftgebundene Kopplung erreicht wird, **gekennzeichnet dadurch, dass** die Mittelachse des Kopplungsteils (21a, 121a) abgewinkelt wird in einem Winkel (β) in Bezug auf die Mittelachse des Lagerteils (21b, 121b), und dass die formgebundene und kraftgebundene Kopplung in wenigstens zwei vorbestimmten Positionen erreicht werden kann, die das Kopplungsteil in einem entsprechenden Loch (24, 124) in dem Endabschnitt (23, 123) des Arms (10, 110) frei aufnehmen, wobei das Verfahren umfasst Ändern eines Arbeitswinkels eines Werkzeugs (3) durch Lösen des Schafts in dem aufnehmenden Loch (24, 124) durch Lösen einer Schraubverbindung (30, 130), so dass das Kopplungsteil (21a, 121a) des Schafts gelöst wird, Drehen in den Endabschnitt in eine neue vorgesehene Position und festes Verriegeln von diesem in dieser Position durch Festziehen der Schraubverbindung.

2. Verfahren nach Anspruch 1, **gekennzeichnet dadurch, dass** es ferner umfasst Fixieren des Arbeitswinkels durch Festziehen der Schraubverbindung durch Führen einer Schneidschraube (30, 130) durch ein zentrales Loch (31, 131) in dem Endabschnitt (23, 123) des Arms (10, 110) und Schraube-Festziehen dieser in einem Gewindeloch (32, 132) in dem Schaft (21, 121).

3. Verfahren nach Anspruch 2, **gekennzeichnet dadurch, dass** es ferner umfasst Schraube-Festziehen des Schraubenkopfes der Schraube (30, 130), so dass er an einer Stufe in einer Aussparung (36, 136) in dem Endabschnitt (23, 123) mit dem zentralen Loch (31, 131) anliegt.

4. Verfahren nach einem der Ansprüche 1-3, **gekennzeichnet dadurch, dass** das Kopplungsteil (21a) des Schafts (21) eine teilweise konische Form aufweist und in der Umfangsrichtung mit einer vorbestimmten Anzahl abgeschrägter Flächen (33) zwischen den konischen Flächen (34) des Kopplungsteils (21a) bereitgestellt wird, wobei die Flächen im Wesentlichen den abgeschrägten Flächen in dem aufnehmenden Loch (24) entsprechen, wobei das Verfahren ferner umfasst Fixieren des Arbeitswinkels durch Festziehen der Schraube (30) während die abgeschrägten Flächen des konischen Teils (21a) des Schafts (21) entsprechend vorgesehene Flächen in einer neuen Position in dem Endabschnitt (23) treffen.

5. Verfahren nach einem der Ansprüche 1-3, **gekennzeichnet dadurch, dass** der im wesentlichen konische Teil (121a) der Welle (121) mit einem profilierten sich ringsum erstreckenden Teil (142) bereitgestellt wird, der in der axialen Richtung gegen sein Ende (138) gerichtet wird, und dass der Endabschnitt (123) an dem Ende des Lochs (124) mit einem entsprechenden einen profilierten ringsum erstreckenden Teil (143) bereitgestellt wird, das in axialer Richtung gegen seine Öffnung gerichtet wird, wobei das Verfahren ferner umfasst Zusammenziehen der profilierten Teile (142, 143) mit Hilfe einer Schraubverbindung (130), so dass die profilierten Teile (142, 143) eine formgebundene und kraftgebundene Kopplung bilden.

6. Landwirtschaftliche Maschine (1), umfassend einen Rahmen (2), wenigstens eine mit dem Rahmen verbundene in der Fahrtrichtung verlagerte Reihe (a, b) von Werkzeugen (3, 103) in der Form von gelagerten Scheiben (3, 103), die frei drehbar sind, wobei jede Scheibe (3, 103) mit einem Arm (10, 110) verbunden ist, der an dem Rahmen (2) gelagert ist und mit dem jede Scheibe über einen Schaft (21, 121) verbunden ist, der an der Nabe der Scheibe angebracht ist, wobei die Nabe (20, 120) jeder Scheibe (3, 103) ein Lagerteil (21b, 121b) für den Schaft (21, 121) aufweist, wobei das Lagerteil in der Mitte der Nabe gelagert ist, und wobei der Schaft an dessen anderen Ende ein Kopplungsteil (21a, 121a) mit einem gebildeten Abschnitt (33, 143) aufweist, so dass es einem gebildeten Abschnitt (142) des Endabschnitts (23, 123) des Arms (10, 110) entspricht, wodurch eine formgebundene und kraftgebundene Kopplung erreicht ist, **gekennzeichnet dadurch, dass** die Mittelachse des Kopplungsteils (21a, 121a) abgewinkelt ist in einem Winkel (β) in Bezug auf die Mittelachse des Lagerteils (21b, 121b), und dass die formgebundene und kraftgebundene Kopplung in wenigstens zwei vorbestimmten Positionen erreicht werden kann, wobei die landwirtschaftliche Maschine (1) ferner umfasst ein Werkzeugeinstellungsgerät, umfassend eine Schraubverbindung (30, 130), die zentral bereitgestellt ist und das Kopplungsteil (21a, 121a) der Welle (21, 121) mit dem Endabschnitt (23, 123) des Arms (10, 110) verbindet, und die bereitgestellt ist, gelöst zu werden, so dass der Schaft in eine neue vorgesehene Position gedreht werden kann durch Lösen des Schafts in einem aufnehmenden Loch, und in dieser Position durch Festziehen der Schraubverbindung fest verriegelt wird, damit die Möglichkeit gegeben ist, einen Arbeitswinkel eines Werkzeugs (3, 103) zu ändern.

7. Landwirtschaftliche Maschine (1) nach Anspruch 6, **gekennzeichnet dadurch, dass** die Schraubverbindung aus einer Schraube (30, 103) gebildet ist, die durch ein zentrales Loch (31, 131) in dem Endabschnitt (23, 123) des Arms (10, 110) geführt ist und bereitgestellt ist, in ein Gewindeloch (32, 132) in dem Kopplungsteil (21a, 121a) des Schafts (21, 121) geschraubt zu werden.

8. Landwirtschaftliche Maschine (1) nach Anspruch 7, **gekennzeichnet dadurch, dass** der Gewindeteil des Gewindelochs (32, 132) lang genug ist, um noch mit dem Gewindeteil in Eingriff zu stehen, wenn die Schraube (30, 130) zum Drehen des Kopplungsteils (21a, 121a) des Schafts (21) gelöst ist in eine neue vorgesehene Position.

9. Landwirtschaftliche Maschine (1) nach Anspruch 6-8, **gekennzeichnet dadurch, dass** das Kopplungsteil (21a) des Schafts (21) eine teilweise konische Form aufweist und in der Umfangsrichtung mit einer vorbestimmten Anzahl abgeschrägter Flächen (33) zwischen den konischen Flächen (34) des Kopplungsteils (21a) bereitgestellt ist, wobei die Flächen im Wesentlichen abgeschrägten Flächen in dem aufnehmenden Loch (24) entsprechen, wobei der Arbeitswinkel durch Festziehen der Schraube (30) fixiert ist, wobei die abgeschrägten Flächen (33) eine formgebundene und kraftgebundene Kopplung bilden, wenn die Teile zusammengebracht worden sind.

10. Landwirtschaftliche Maschine (1) nach einem der Ansprüche 6-8, **gekennzeichnet dadurch, dass** der im wesentlichen konische Teil (121a) des Schafts (121) mit einem profilierten sich ringsum erstreckenden Teil (142) bereitgestellt ist, der in der axialen Richtung gegen den Punkt des im Wesentlichen konischen Teils gerichtet ist, und dass der Endabschnitt (123) an dem Ende des im Wesentlichen konischen Lochs (124) mit einem entsprechenden profilierten ringsum erstreckenden Teil (143) bereitgestellt ist, das in der axialen Richtung gerichtet ist, wobei der Arbeitswinkel durch Festziehen der Schraube (130) fixiert ist, wobei die profilierten Teile (142, 143) eine formgebundene und kraftgebundene Kopplung bilden, wenn die Teile zusammengebracht worden sind.

11. Landwirtschaftliche Maschine (1) nach einem der Ansprüche 4-9, **gekennzeichnet dadurch, dass** zwischen dem Lagerteil (21b, 121b) des Schafts (21, 121) und dem Kopplungsteil (21a, 121a) des Schafts ein teilweise kreisförmiges Teil (21c, 121c) mit glatten Eingriffsflächen bereitgestellt ist, um es möglich zu machen, den Schaft zu drehen, z.B. durch Mittel eines Schraubenschlüssels.

## Revendications

1. Procédé de réglage d'outil pour une machine agricole (1) comprenant un châssis (2), au moins une rangée transférée (a, b) d'outils (3) sous forme de disques tournants (3), connectée au châssis dans le sens de la marche, lesquels disques sont aptes à tourner librement, chaque disque (3) étant connecté à un bras (10, 110), qui est monté de façon tournante au niveau du châssis (2) et auquel chaque disque est connecté via un arbre (21, 121) fixé au moyeu du disque, le moyeu (20, 120) de chaque disque (3, 103) ayant une partie (21b, 121b) de roulement pour l'arbre (21, 121), laquelle partie de roulement est montée de façon tournante au milieu du moyeu, et l'arbre, à son autre extrémité, ayant une partie de liaison (21a, 121a) formée de sorte qu'elle corresponde sensiblement à une partie formée située à une partie d'extrémité (23, 123) du bras (10, 110), de sorte qu'un accouplement à liaison par formes et à liaison par force soit obtenu, **caractérisé en ce que** l'axe central de la partie de liaison (21a, 121a) est incliné selon un angle (β) par rapport à l'axe central de la partie de roulement (21b, 121b), et **en ce que** l'accouplement à liaison par formes et à liaison par force puisse être obtenu dans au moins deux positions prédéterminées recevant librement ladite partie de liaison dans un trou correspondant (24, 124) aménagé dans la partie d'extrémité (23, 123) du bras (10, 110), le procédé comprenant le fait de modifier un angle de travail d'un outil (3) en desserrant l'arbre dans le trou de réception (24, 124) par desserrage d'une jonction à vis (30, 130), de telle sorte que la partie de liaison (21a, 121a) de l'arbre soit desserrée, tournant dans la partie d'extrémité vers une nouvelle position souhaitée, et le fait de la bloquer de façon fixe dans cette position en serrant ladite jonction à vis.

2. Procédé selon la revendication 1, **caractérisé en ce qu'**il comprend en outre le fait de fixer ledit angle de travail en serrant ladite jonction à vis par l'entraînement d'une vis coupée (30, 130) à travers un trou central (31, 131) aménagé dans la portion d'extrémité (23, 123) du bras (10, 110) et en la serrant par vissage dans un trou fileté (32, 132) aménagé dans l'arbre (21, 121).

3. Procédé selon la revendication 2, **caractérisé en ce qu'**il comprend en outre le fait de serrer par vissage ladite tête de vis de ladite vis (30, 130) de manière qu'elle bute sur une marche présente dans un évidement (36, 136) dans la portion d'extrémité (23, 123) avec ledit trou central (31, 131).

4. Procédé selon l'une quelconque des revendications 1 à 3, **caractérisé en ce que** la partie de liaison (21a) de l'arbre (21) a une forme partiellement conique et est prévue dans la direction circonférentielle avec un nombre prédéterminé de surfaces chanfreinées (33) situées entre les surfaces coniques (34) de la partie de liaison (21a), lesdites surfaces correspondant sensiblement aux surfaces chanfreinées dans le trou de réception (24), le procédé comprenant en outre le fait de fixer ledit angle de travail en serrant la vis (30) alors que les surfaces chanfreinées de la partie conique (21a) de l'arbre (21) rencontrent des surfaces prévues de manière correspondante dans une nouvelle position dans la partie d'extrémité (23).

5. Procédé selon l'une quelconque des revendications 1 à 3, **caractérisé en ce que** la partie sensiblement conique (121a) de l'arbre (121) est munie d'une partie d'extension arrondie profilée (142) qui est placée dans la direction axiale à l'opposé de son extrémité (138), et **en ce que** la partie d'extrémité (123) à l'extrémité du trou (124) est pourvue d'une partie d'extension arrondie profilée (143) correspondante qui est placée dans le sens axial à l'opposé de son ouverture, le procédé comprenant en outre le fait de serrer ensemble les parties profilées (142, 143) au moyen d'une jonction à vis (130) de sorte que les parties profilées (142, 143) forment un accouplement à liaison par formes et à liaison par force.

6. Machine agricole (1) comprenant un châssis (2), au moins une rangée transférée (a, b) d'outils (3, 103) sous forme de disques tournants (3, 103), connectée au châssis dans le sens de la marche, lesquels disques sont aptes à tourner librement, chaque disque (3, 103) étant connecté à un bras (10, 110), qui est monté de façon tournante au niveau du châssis (2) et auquel chaque disque est connecté via un arbre (21, 121) fixé au moyeu du disque, le moyeu (20, 120) de chaque disque (3, 103) ayant une partie de roulement (21b, 121b) pour l'arbre (21, 121), laquelle partie de roulement est montée de façon tournante au milieu du moyeu, et l'arbre, à son autre extrémité, ayant une partie de liaison (21a, 121a) ayant une partie formée (33, 143), de sorte qu'elle corresponde à une partie formée (142) de la partie d'extrémité (23, 123) du bras (10, 110), de sorte qu'un accouplement à liaison par formes et à liaison par force soit obtenu, **caractérisée en ce que** l'axe central de la partie de liaison (21a, 121a) est incliné selon un angle (β) par rapport à l'axe central de la partie de roulement (21b, 121b), et **en ce que** l'accouplement à liaison par formes et à liaison par force puisse être obtenu dans au moins deux positons prédéterminés, la machine agricole (1) comprenant en outre un dispositif de réglage d'outil comprenant une jonction à vis (30, 130), qui est prévue de façon centrale et qui relie la partie de liaison (21a, 121a) de l'arbre (21, 121) à la partie d'extrémité (23, 123) du bras (10, 110), et qui est prévue pour être desserrée afin que l'arbre puisse être tourné vers une nouvelle position souhaitée en desserrant l'arbre dans un trou de réception, et être bloquée de façon fixe dans cette position en serrant ladite jonction à vis, donnant ainsi la possibilité de modifier l'angle de travail d'un outil (3, 103).

7. Machine agricole (1) selon la revendication 6, **caractérisée en ce que** ladite jonction à vis est constituée d'une vis (30, 103) qui est engagée dans un trou central (31, 131) dans la portion d'extrémité (23, 123) du bras (10, 110) et qui est prévue pour être vissée dans un trou fileté (32, 132) aménagé dans la partie de liaison (21a, 121a) de l'arbre (21, 121).

8. Machine agricole (1) selon la revendication 7, **caractérisée en ce que** la partie filetée du trou fileté (32, 132) est suffisamment longue pour être encore en engagement avec ladite partie filetée si la vis (30, 130) de rotation de la partie de liaison (21a, 121a) de l'arbre (21, 121) est desserrée dans une nouvelle position souhaitée.

9. Machine agricole (1) selon les revendications 6 à 8, **caractérisée en ce que** la partie de liaison (21a) de l'arbre (21) a une forme partiellement conique et est prévue dans la direction circonférentielle avec un nombre prédéterminé de surfaces chanfreinées (33) entre les surfaces coniques (34) de la partie de liaison (21a), lesquelles surfaces correspondent sensiblement aux surfaces chanfreinées présentes dans le trou de réception (24), ledit angle de travail étant fixé en serrant ladite vis (30), les surfaces chanfreinées (33) formant un accouplement à liaison par formes et à liaison par puissance liée lorsque les parties ont été réunies.

10. Machine agricole (1) selon l'une quelconque des revendications 6 à 8, **caractérisée en ce que** la partie substantiellement conique (121a) de l'arbre (121) est munie d'une partie d'extension arrondie profilée (142), qui, dans la direction d'axe, est placée à l'opposé de la pointe de la partie sensiblement conique, et **en ce que** la partie d'extrémité (123), à l'extrémité du trou sensiblement conique (124), est pourvue d'une partie d'extension arrondie profilée (143) correspondante, qui est tournée dans la direction d'axe, ledit angle de travail étant fixé en serrant la vis (130), les parties profilées (142, 143) formant un accouplement à liaison par formes et à liaison par force lorsque les parties ont été réunies.

11. Machine agricole (1) selon l'une quelconque des revendications 4 à 9, **caractérisée en ce qu'**entre la partie de roulement (21b, 121b) de l'arbre (21, 121) et la partie de liaison (21a, 121a) de l'arbre est prévue une partie partiellement circulaire (21c, 121c) avec des surfaces d'engagement plates pour permettre la rotation de l'arbre, par exemple au moyen d'une clé.
